Europäisches Patentamt

European Patent Office

Office européen des brevets

(11) Veröffentlichungsnummer: **0 383 228**
**A1**

(12) **EUROPÄISCHE PATENTANMELDUNG**

(21) Anmeldenummer: **90102708.6**

(51) Int. Cl.⁵: **B09B 3/00**

(22) Anmeldetag: **12.02.90**

(30) Priorität: **13.02.89 DE 3904244**
**26.10.89 DE 3935706**

(43) Veröffentlichungstag der Anmeldung:
**22.08.90 Patentblatt 90/34**

(84) Benannte Vertragsstaaten:
**GR**

(71) Anmelder: **Schraufstetter, Wilfried**
**Schlossstrasse 5**
**D-8045 Ismaning(DE)**

Anmelder: **Gastinger, Dieter**
**Schwojerstrasse 17**
**D-8000 München 60(DE)**

(72) Erfinder: **Schraufstetter, Wilfried**
**Schlossstrasse 5**
**D-8045 Ismaning(DE)**
Erfinder: **Gastinger, Dieter**
**Schwojerstrasse 17**
**D-8000 München 60(DE)**

(74) Vertreter: **Lesser, Karl-Boiko, Dipl.-Ing.**
**European Patent Attorney**
**Johanneskirchnerstrasse 149a**
**D-8000 München 81(DE)**

(54) **Verfahren zum Gasfreimachen von Abfallstoffen.**

(57) Es wird ein Verfahren zum Gasfreimachen von Abfallstoffen, insbesondere Isoliermaterialien, Spraydosen oder dergleichen, beschrieben. Dies kennzeichnet sich durch die Verfahrensschritte Pressen der Abfallstoffe in einer Schneckenpresse, Auffangen der entweichenden Gase und gegebenenfalls stufenweises Kondensieren der entweichenden Gase. Zuvor können die Abfallstoffe noch geshreddert werden.

Die Abfallstoffe, insbesondere Isoliermaterialien, Spraydosen oder dergleichen, können umweltfreundlich gasfrei gemacht werden, so daß die festen Bestandteile möglichst wieder aufbereitet werden können.

EP 0 383 228 A1

## Verfahren zum Gasfreimachen von Abfallstoffen

Die Erfindung betrifft ein Verfahren zum Gasfreimachen von Abfallstoffen, insbesondere Isoliermaterialien, Spraydosen oder dergleichen.

In vielen Isoliermaterialien, wie z.B. Kühlschrankisolierungen, modernen Polsterstoffen, Schaumstoffen, insbesondere lösungsmittelhaltigen Schaumstoffen, Spraydosen oder dergleichen befinden sich schädliche Stoffe, wie zum Beispiel FCKW (Fluorkohlenwasserstoffe) und Aerosole.

In der Regel werden solche Materialien heute noch auf Abfalldeponien, wie Müllkippen oder dergleichen, gelagert. Bei diesen Abfallstoffen ist ein Teil der gasförmigen Stoffe in die festen Bestandteile diffundiert und diffundiert, z.B. nach gewaltsamen Öffnen der Spraydose, zum Teil langsam wieder heraus.

Es ist heutzutage ein großes Problem, solche Abfallstoffe zu entsorgen, ohne daß die schädlichen gasförmigen Stoffe frei werden und in die Umwelt gelangen.

Der Erfindung liegt die Aufgabe zugrunde, ein Verfahren zu schaffen, mit dem solche Abfallstoffe, insbesondere Isoliermaterialien, Spraydosen oder dergleichen, umweltfreundlich gasfrei gemacht werden können, so daß die festen Bestandteile möglichst wieder aufbereitet werden können.

Diese Aufgabe wird durch das erfindungsgemäße Verfahren gelöst. Das erfindungsgemäße Verfahren zum Gasfreimachen von Abfallstoffen, insbesondere Isoliermaterialien, Spraydosen oder dergleichen, zeichnet sich durch folgende Verfahrensschritte aus: das Pressen der Abfallstoffe in einer Schneckenpresse, das Auffangen der entweichenden Gase und das gegebenenfalls stufenweise Kondensieren der entweichenden Gase. Auf diese Art und Weise können die gasförmigen Bestandteile der Abfallstoffe von den festen Bestandteilen abgetrennt werden.

Die Abfallstoffe werden in den Einfülltrichter einer Schneckenpresse eingegeben. Dazu werden die Abfallstoffe gegebenenfalls vor dem Eingeben in die Schneckenpresse vorzerkleinert. Hierzu kann z.B. eine herkömmliche Shredderanlage verwendet werden.

Die in die Schneckenpresse eingegebenen Abfallstoffe werden durch die umlaufende(n) Schnecke(n) sehr stark zusammengepreßt. Der Druck auf die gepreßten Abfallstoffe in der Schneckenpresse kann dabei bis zu 100 bar betragen.

Zweckmäßigerweise werden die Abfallstoffe in der Schneckenpresse solange geknetet, bis im wesentlichen die gesamte Gasmenge aus den Feststoffen entwichen ist. Die entweichenden Gase werden aufgefangen. Dazu ist die gesamte zur Ausführung des Verfahrens verwendete Anlage gasdicht umhüllt. Zumindest die Wände dieser Umhüllung werden gekühlt, sodaß an ihnen die entweichenden Gase kondensieren können.

Die Abfallstoffe können auch noch Flüssigkeiten enthalten, wobei diese beim Pressen in der Schneckenpresse verdampfen. Durch den großen Druck und die dadurch beim Pressen in der Schneckenpresse entstehende Wärme verdampft die Flüssigkeit, insbesondere Wasser. Die verdampfende Flüssigkeit wird zusammen mit den anderen Gasen aufgefangen und kondensiert.

Die Feststoffbestandteile werden so weit als möglich komprimiert und treten aus der Schneckenpresse, je nach Ausgangsmaterial z.B. in Form von Stangen oder Pellets aus.

Diese Pellets oder Stangen können als solche gelagert werden. Sie können aber auch einer Wiederaufbereitung bzw. Weiterverwendung zugeführt werden.

Die Schneckenpresse kann z.B. eine Ausbildung aufweisen, wie sie in den WO-A-83/03.999, DE-A-3.714.508, DE-A-3.714.509 und DE-A-3.714.518 beschrieben sind. Dabei handelt es sich um eine Schneckenpresse mit zwei parallel zueinander angeordneten Schnecken.

Die Abfallstoffe gelangen, z.B. aus einem Vorratsbehälter, gegebenenfalls in eine Shredderanlage, in der sie vorzerkleinert werden. Von dort werden sie z.B. auf einem Förderband zum Aufnahmetrichter der Schneckenpresse geführt.

Die Shredderanlage, das Förderband oder dergleichen und die Schneckenpresse sind gasdicht ausgebildet bzw. von einer gasdichten Umhüllung umgeben. Die Umhüllung bzw. z.B. ein äußerer Mantel der Schneckenpresse werden so weit abgekühlt, daß die entweichenden Gase und Dämpfe, soweit sie mit denselben in Berührung kommen und nicht berührungslos in eine Kondensationsanlage gelangen, innerhalb derselben kondensieren.

So ist insbesondere das Zufuhr-Fördermittel für die Schneckenpresse in einem Kühltunnel oder einer sogenannten Kühlstrecke angeordnet.

Der Druck in der gesamten Anlage wird so eingestellt, daß die Anlage druckdicht ist.

Die entweichenden Gase und Dämpfe werden gesammelt und gegebenenfalls stufenweise von einander durch Kondensieren getrennt.

### Ansprüche

1. Verfahren zum Gasfreimachen von Abfallstoffen, insbesondere Isoliermaterialien, Spraydosen oder dergleichen, gekennzeichnet durch das Pressen der Abfallstoffe in einer Schneckenpresse, das Auffangen der entweichenden Gase und das gegebenenfalls stufenweise Kondensieren der entweichenden Gase.

2. Verfahren nach Anspruch 1, dadurch gekennzeichnet, daß die Abfallstoffe gegebenenfalls vor dem Eingeben in die Schneckenpresse, vorzugsweise in einer Shredderanlage, vorzerkleinert werden.

3. Verfahren nach einem der vorhergehenden Ansprüche, dadurch gekennzeichnet, daß die Abfallstoffe mit einem Druck von bis zu 100 bar gepreßt werden.

4. Verfahren nach einem der vorhergehenden Ansprüche, dadurch gekennzeichnet, daß die Abfallstoffe in der Schneckenpresse solange geknetet werden, bis im wesentlichen die gesamte Gasmenge, aus den Feststoffen entwichen ist.

5. Verfahren nach einem der vorhergehenden Ansprüche, dadurch gekennzeichnet, daß in den Abfallstoffen enthaltene Flüssigkeiten beim Pressen in der Schneckenpresse verdampft werden und der Dampf nach dem Entweichen aus der Presse kondensiert wird.

6. Verfahren nach einem der vorhergehenden Ansprüche, dadurch gekennzeichnet, daß die Feststoffbestandteile der Abfallstoffe so weit als jeweils möglich komprimiert werden und aus der Schneckenpresse, je nach Ausgangsmaterial z.B. in Form von Stangen oder Pellets austreten.

7. Verfahren nach einem der vorhergehenden Ansprüche, dadurch gekennzeichnet, daß die Pellets oder Stangen einer Wiederaufbereitung bzw. Weiterverwendung zugeführt werden.

Europäisches
Patentamt

**EUROPÄISCHER RECHERCHENBERICHT**

Nummer der Anmeldung

EP 90 10 2708

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-4 531 950 (BURT)<br>* Spalte 1, Zeilen 6-16,39-44; Spalte 2, Zeilen 32-58; Spalte 3, Zeile 38 - Spalte 4, Zeile 18; Spalte 5, Zeilen 33-42; Spalte 6, Zeilen 6-20; Figur *<br>--- | 1 | B 09 B 3/00 |
| A | US-A-4 531 951 (BURT et al.)<br>* Spalte 1, Zeilen 6-17; Spalte 2, Zeile 34 - Spalte 3, Zeile 22; Spalte 4, Zeilen 1-53; Spalte 5, Zeilen 3-6; Spalte 6, Zeilen 21-30; Spalte 6, Zeile 62 - Spalte 7, Zeile 8; Figuren *<br>--- | 1 | |
| A | DE-U-8 705 805 (BASI SCHÖBERL GmbH & CO.)<br>* Seite 9, Zeile 1 - Seite 10, Zeile 2; Seite 13, Zeilen 11-18; Seite 14, Zeilen 7-13; Figur *<br>--- | 1 | |
| A,D | WO-A-8 303 999 (GUTKNECHT)<br>* Seite 3, Zeilen 19-26; Seite 5, Zeile 29 - Seite 6, Zeile 28; Figuren *<br>--- | 1,3,5-7 | **RECHERCHIERTE SACHGEBIETE (Int. Cl.5)** |
| A,D | DE-A-3 714 509 (SCHRAUFSTETTER et al.)<br>* Spalte 2, Zeilen 10-22,50-55; Spalte 3, Zeilen 36-54; Spalte 4, Zeilen 3-11; Figuren *<br>------ | 1,3,5-7 | B 09 B<br>B 30 B<br>C 08 J |

Der vorliegende Recherchenbericht wurde für alle Patentansprüche erstellt

| Recherchenort | Abschlußdatum der Recherche | Prüfer |
|---|---|---|
| DEN HAAG | 07-05-1990 | VAN DER ZEE W.T. |